# EUROPÄISCHE PATENTANMELDUNG

(11) **EP 3 292 946 A1**
(43) Veröffentlichungstag der Anmeldung: **14.03.2018**
(21) Anmeldenummer: 17189315.9
(22) Anmeldetag: 05.09.2017
(51) Int. Cl.: B23P 15/28, B24B 1/04, B23C 3/00, B23B 31/02

(54) **VERFAHREN ZUM BEARBEITEN EINES WERKSTÜCKS AUS HARTMETALL FÜR DIE HERSTELLUNG EINES WERKZEUGGRUNDKÖRPERS AN EINER NUMERISCH GESTEUERTEN WERKZEUGMASCHINE MIT WERKZEUGTRAGENDER ARBEITSSPINDEL**

(30) Priorität: 09.09.2016 DE 102016217251
(71) Anmelder: Sauer GmbH, 55758 Stipshausen (DE)
(72) Erfinder: Ketelaer, Jens, 65205 Wiesbaden (DE)
(74) Vertreter: MERH-IP Matias Erny Reichl Hoffmann Patentanwälte PartG mbB

(57) **Zusammenfassung**

Die vorliegende Erfindung betrifft ein Verfahren zum Bearbeiten eines Werkstücks WS aus Hartmetall für die Herstellung eines Werkzeuggrundkörpers an einer numerisch gesteuerten Werkzeugmaschine 1000 mit werkzeugtragender Arbeitsspindel 1040, umfassend: Aufnehmen eines ein Werkzeug 90 haltenden Werkzeughalters 10 an einer Werkzeugaufnahme 1041 der Arbeitsspindel 1040 der Werkzeugmaschine 1000, wobei der Werkzeughalter 10 einen Schwingungserzeuger 20 zum Erzeugen einer Schwingung des Werkzeugs 90 umfasst, und Bearbeiten des an der Werkzeugmaschine 1000 eingespannten Werkstücks WS aus Hartmetall mit dem an dem Werkzeughalter 10 gehaltenen, schwingenden Werkzeug 90 zum Herausarbeiten von einer oder mehreren Aussparungen an dem Werkstück WS zur Herstellung des Werkzeuggrundkörpers.

## Beschreibung

Die vorliegende Erfindung betrifft ein Verfahren zum Bearbeiten eines Werkstücks aus Hartmetall für die Herstellung eines Werkzeuggrundkörpers an einer numerisch gesteuerten Werkzeugmaschine mit werkzeugtragender Arbeitsspindel. Des Weiteren betrifft die vorliegende Erfindung eine Steuervorrichtung einer numerisch gesteuerten Werkzeugmaschine sowie ein Computerprogramm-Produkt, mit diesen das vorgenannte Verfahren gesteuert werden kann.

### HINTERGRUND DER ERFINDUNG

Im Allgemeinen können bei der Bearbeitung von Werkstücken aus Hartmetall übliche spanabhebende Bearbeitungsverfahren wie das Fräsen nicht angewendet werden. Bei dem Versuch, Hartmetall mit einem Fräser zu bearbeiten, würde der Werkzeugverschleiß zum Materialabtrag am Werkstück in keinem wirtschaftlichen Verhältnis stehen. Daher greift man auf Schleifverfahren zurück, da hier mit anderen Werkzeug-Werkstoffen (z.B. Diamant) gearbeitet und das Werkstück wirtschaftlicher bearbeitet werden kann.

Im Speziellen sind für die Herstellung eines Werkzeuggrundkörpers aus einem Werkstück aus Hartmetall Spezialmaschinen bekannt, die mittels schleifender Werkzeuge die Konturen und Aussparungen in das Werkstück einarbeiten.

Der daraus entstehende Werkzeuggrundkörper ist auch als Trägerwerkzeug bekannt. Er dient meist dazu, noch festere und für den jeweiligen Anwendungsfall speziell gehärtete Schneiden wie z.B. angeschraubte Wendeschneidplatten oder Schneidplatten aus PKD (Polykristalliner Diamant), die an dem Werkzeuggrundkörper fest angelötet werden, aufzunehmen. Darüber hinaus sind meistens an dem Werkzeuggrundkörper Spankammern/-nuten zur Aufnahme der Späne und Auskammerungen vorgesehen, die Klemmen zum Festklemmen der Schneiden aufnehmen können. Es gibt die Werkzeuggrundkörper in den verschiedensten Ausführungsformen, beispielsweise als Messerkopf.

Dieser Aufbau aus Werkzeuggrundkörper und einzeln befestigter Schneiden hat den entscheidenden Vorteil, dass nach dem Verschleiß der Schneiden nicht die gesamte Werkzeug-Baugruppe (Schneiden und Werkzeuggrundkörper) ausgetauscht werden muss, sondern lediglich die Schneiden erneuert werden müssen. Im Fall von Wendeschneidplatten, die z.B. an dem Werkzeuggrundkörper angeschraubt sind, können diese einfach gelöst und durch neue Schneidplatten ersetzt werden. Allerdings kann es auch sein, dass z.B. die angelöteten Schneiden (wie z.B. PKD-Schneidplatten) durch Schleifen nachgeschärft werden müssen.

Um neben dem Befestigen der Schneiden gleichzeitig auch Kühlmittel zu den entsprechenden Schneiden zu leiten und somit die Lebensdauer dieser Werkzeuge zu erhöhen, sind die Werkzeuggrundkörper oftmals mit internen Kühlmittelbohrungen versehen, die in den Werkzeuggrundkörper eingebracht werden.

Dafür müssen bisher die vorbereiteten Werkstücke neben dem schleifenden Bearbeiten in einer Spezialmaschine zusätzlich in einer Erodier-Maschine aufgespannt und die Kühlkanäle in den Werkzeuggrundkörper z.B. mittels Senkerodieren oder Bohrerodieren eingebracht werden.

Dies bedeutet für die Fertigung, dass mehrere unterschiedliche Maschinen verwendet und dabei teilweise sehr aufwendige Prozesse wie zum Beispiel das Erodieren angewendet werden müssen.

Die Nachteile des Erodierens zeigen sich unter anderem darin, dass lange Vorbereitungszeiten bei der Elektrodenherstellung notwendig sind. Unterschiedliche Kühlkanäle bedingen jeweils unterschiedliche Elektroden, die zu definieren, zu konstruieren und zu fertigen sind. Zudem ist der Zeitaufwand beim Einrichten der Maschine hoch (Ausmessen der Elektrode bzgl. Mittenversatz, Drehung, Länge). Darüber hinaus wird bei zunehmendem Spannungswert oder zunehmender Spannungsimpuls-Frequenz, um die Abtragsraten des zu erodierenden Materials zu erhöhen, der ohnehin schon hohe Verschleiß der aufwendig gefertigten Elektrode weiter erhöht.

Daher ist es wichtig, das Erodieren bei der Bearbeitung eines Werkstücks aus Hartmetall für die Herstellung eines Werkzeuggrundkörpers zu umgehen und stattdessen die Fertigung in einer Aufspannung an einer Maschine durchzuführen. Zusätzlich sollen die Abtragsleistung des Bearbeitungsverfahrens und gleichzeitig die Standzeit des Werkzeugs erhöht werden.

In Summe soll dadurch der Materialeinsatz, die benötigte Energie und auch die Zeit für die Herstellung eines Werkzeuggrundkörpers aus Hartmetall entschieden gesenkt werden.

### ZUSAMMENFASSUNG DER ERFINDUNG

Eine Aufgabe der vorliegenden Erfindung ist es daher, ein Verfahren zur Bearbeitung eines Werkstücks aus Hartmetall für die Herstellung eines Werkzeuggrundkörpers an einer numerisch gesteuerten Werkzeugmaschine mit werkzeugtragender Arbeitsspindel bereitzustellen, mit dem die obigen Probleme vermieden werden.

Des Weiteren ist es Aufgabe der vorliegenden Erfindung, eine Steuervorrichtung und ein Computerprogramm-Produkt bereitzustellen, mit dem das erfindungsgemäße Verfahren gesteuert werden kann.

Diese Aufgaben werden gelöst durch ein Verfahren nach Anspruch 1, eine Steuervorrichtung nach Anspruch 15 und ein Computerprogramm-Produkt nach Anspruch 21. Die abhängigen Ansprüche beziehen sich jeweils auf vorteilhafte Ausführungsbeispiele des erfindungsgemäßen Verfahrens oder der erfindungsgemäßen Steuervorrichtung.

Das erfindungsgemäße Verfahren zum Bearbeiten eines Werkstücks aus Hartmetall für die Herstellung eines Werkzeuggrundkörpers an einer numerisch gesteuerten Werkzeugmaschine mit werkzeugtragender Arbeitsspindel umfasst die Schritte: Aufnehmen eines ein Werkzeug haltenden Werkzeughalters an einer Werkzeugaufnahme der Arbeitsspindel der Werkzeugmaschine, wobei der Werkzeughalter einen Schwingungserzeuger zum Erzeugen einer Schwingung des Werkzeugs umfasst, und Bearbeiten des an der Werkzeugmaschine eingespannten Werkstücks aus Hartmetall mit dem an dem Werkzeughalter gehaltenen, schwingenden Werkzeug zum Herausarbeiten von einer oder mehreren Aussparungen an dem Werkstück zur Herstellung des Werkzeuggrundkörpers.

Durch den Einsatz des Schwingungserzeugers kann bei dem beschriebenen Verfahren neben dem üblichen rotatorischen Antreiben des Werkzeugs auch eine Schwingung in das Werkzeug eingetragen werden, dass den Abtragprozess des Hartmetall-Materials am Werkstück unterstützt.

Die Erfinder haben überaschenderweise festgestellt, dass durch das in Schwingung versetzen des Werkzeugs im Vergleich ohne schwingende Bewegung des Werkzeugs im Abtragprozess bis zu dem Zweifachen an Material des Hartmetalls in gleicher Zeit abgetragen werden kann.

Weiterhin ergeben sich Vorteile in der Anwendung des vorbeschriebenen Verfahrens, da das Werkstück in seiner eingerichteten Position (Aufspannung) verbleiben kann, während unterschiedlichste Aussparungen für z.B. Befestigungsmöglichkeiten für Schneidelemente oder teils mit üblichen Verfahren nur schwer erzeugbare Aussparungen in das Werkstück eingearbeitet werden. Zusätzlich können bei Bedarf die Werkzeuge gewechselt werden, wenn dies durch die unterschiedlichen Aussparungen notwendig ist.

Zusätzlich kann die optimierte Abtragrate aber auch dazu genutzt werden, die Prozesskräfte am Werkzeug zu reduzieren. Die geringeren Prozesskräfte führen zu einer geringeren Temperaturentwicklung am Werkzeug und am Werkstück und können so den Verschleiß des Werkzeugs im erheblichen Maße reduzieren.

Eine vorteilhafte Weiterbildung des Verfahrens liegt darin, dass das Werkzeug ein Schleifwerkzeug ist.

Besonders vorteilhaft lässt sich das Verfahren weiterbilden, indem das Schleifwerkzeug eine Schleifscheibe und/oder einen Schleifstift umfasst.

Der Einsatz des Schwingungserzeugers lässt sich vorteilhafterweise auf die Bearbeitung von Werkstoffen, im Besonderen von sehr harten Werkstoffen, mittels schleifender Werkzeuge nach dem beschriebenen Verfahren anwenden. Schleifende Werkzeuge haben oftmals einen deutlich geringeren Materialabtrag als Werkzeuge mit geometrisch bestimmter Schneide wie zum Beispiel im Fall eines Fräsers, doch können diese Werkzeuge mit speziellen Einsatzstoffen (z.B. Diamant) versehen werden, die sie für den Einsatz an sehr harten Werkstoffen wie Hartmetall besonders widerstandsfähig und langlebig machen. Durch das Eintragen der Schwingung von dem Schwingungserzeuger in das schleifende Werkzeug können zum Teil die geringeren Abtragraten des Werkstückmaterials kompensiert werden.

Das Verfahren lässt sich zudem in vorteilhafter Weise so weiterbilden, dass der Schwingungserzeuger Schwingungen des Werkzeugs in einer Richtung axial zu der Spindelachsrichtung der Arbeitsspindel, in einer Richtung radial zu der Spindelachsrichtung der Arbeitsspindel und/oder in Umfangsrichtung um die Spindelachse der Arbeitsspindel erzeugt.

Der Schwingungserzeuger ist nicht darauf beschränkt, einzig eine schwingende Bewegung des Werkzeugs axial zur Spindelachsrichtung der Arbeitsspindel zu erzeugen. Der Schwingungserzeuger kann vielmehr auch dazu genutzt werden, eine Schwingungsbewegung des Werkzeugs in radialer Richtung zu der Spindelachsrichtung der Arbeitsspindel hervorzurufen. Beide schwingende Bewegungsformen des Werkzeugs unterstützen den Materialabtrag am Werkstück im erheblichen Maße.

Ein Sonderfall stellt die schwingende (oder oszillierende) Bewegung des Werkzeugs in Umfangsrichtung um die Spindelachse der Arbeitsspindel dar. Diese Form der Werkzeugbewegung kann dabei auf das rotatorische Antreiben des Werkzeugs durch einen weiteren Aktor verzichten und vielmehr ausschließlich auf den Schwingungserzeuger als Antrieb des Werkzeugs zurückgreifen. Diese Form der Werkzeugbewegung eignet sich für Werkzeuge mit geometrisch unbestimmter Schneide, wie dies bei schleifenden Werkzeugen der Fall ist, besonders gut.

Eine vorteilhafte Weiterbildung des Verfahrens besteht darin, dass die durch den Schwingungserzeuger erzeugten Schwingungen des Werkzeugs im Ultraschallbereich liegen, insbesondere bei Frequenzen größer 10 kHz, insbesondere bevorzugt größer 15 kHz..

Durch eine besonders hochfrequente Schwingbewegung des Werkzeugs kann der Materialabtrag im besonders hohen Maße gesteigert werden, da das Werkzeug vielmehr spanabhebende Bewegungen vollzieht und das lösen der Späne durch die hochfrequente Schwingung zusätzlich unterstützt wird.

Das Verfahren kann vorteilhafterweise dadurch weitergebildet werden, dass ein Arbeitssignal für das Erzeugen der Schwingung des Werkzeugs kontaktlos an den Schwingungserzeuger übertragen wird.

Diese Form der berührungslosen Signal-Übertragung hat den Vorteil, dass keine zusätzliche Schaltung oder Energieversorgung im Werkzeughalter oder ein Netzteil nötig ist, um das Arbeitssignal in den Werkzeughalter zu übertragen, da die induktive Übertragung keine weitere Energie benötigt.

Das Verfahren lässt sich vorteilhaft in der Art weiterbilden, dass der Schwingungserzeuger einen oder mehrere piezoelektrische Aktoren umfasst.

Der Vorteil eines Piezo-Aktor-Systems liegt darin, dass extrem hohe Frequenzen (Ultraschall) durch das sehr hohe dynamische Verhalten der Piezokristalle erzeugt werden können, wobei gleichzeitig die Piezo-Elemente eine hohe Robustheit und gutes lineares Steuerungsverhalten aufweisen.

Eine besonders vorteilhafte Weiterbildung des Verfahrens liegt darin, dass das Herausarbeiten von einer oder mehreren Aussparungen an dem Werkstück folgende Schritte umfasst: Herausarbeiten von einer oder mehreren Spannuten des herzustellenden Werkzeuggrundkörpers, Herausarbeiten von einem oder mehreren Plattensitzen des herzustellenden Werkzeuggrundkörpers, Herausarbeiten von einem oder mehreren Kühlkanälen des herzustellenden Werkzeuggrundkörpers, Herausarbeiten von einer oder mehreren Fasen des herzustellenden Werkzeuggrundkörpers, Herausarbeiten von einem oder mehreren Freiwinkeln des herzustellenden Werkzeuggrundkörpers, und/oder Herausarbeiten von einem oder mehreren Schneidkanten des herzustellenden Werkzeuggrundkörpers.

Durch den Einsatz des Schwingungserzeuger und der vorteilhaften Wirkungsweise einer in das Werkzeug eingetragenen Schwingung, wie bereits weiter oben beschrieben, können nun neben dem Schleifen von Plattensitzen und/oder Spannuten, wie dies bei Spezialmaschinen für die Herstellung von Werkzeuggrundkörpern üblich ist, nun auch die Kühlkanäle in einer Werkzeugmaschine in das zu bearbeitende Werkstück eingebracht werden. Somit ist der Einsatz einer zusätzlichen Maschine (wie zum Beispiel einer Erodier-Maschine) nicht mehr notwendig und alle notwendigen Bearbeitungsschritte am herzustellenden Werkzeuggrundkörper können effizient z.B. in einer Aufspannung in einer Werkzeugmaschine vorgenommen werden.

Neben dem Bearbeiten des herzustellenden Werkzeuggrundkörpers für das Herausarbeiten von Plattensitzen, Spannuten und/oder Kühlkanälen in einer Aufspannung können mit dem beschriebenen Verfahren nun auch Fasen, Freiwinkel und Schneidkanten herausgearbeitet werden, während der herzustellende Werkzeuggrundkörper in seiner Aufspannung verbleibt.

Das Verfahren lässt sich in besonders vorteilhafter Weise weiterbilden, indem das Herausarbeiten von einer oder mehreren Spannuten des herzustellenden Werkzeuggrundkörpers, das Herausarbeiten von einem oder mehreren Plattensitzen des herzustellenden Werkzeuggrundkörpers, das Herausarbeiten von einem oder mehreren Kühlkanälen des herzustellenden Werkzeuggrundkörpers, das Herausarbeiten von einer oder mehreren Fasen des herzustellenden Werkzeuggrundkörpers, das Herausarbeiten von einem oder mehreren Freiwinkeln des herzustellenden Werkzeuggrundkörpers, und/oder das Herausarbeiten von einem oder mehreren Schneidkanten des herzustellenden Werkzeuggrundkörpers in einer Aufspannung des Werkstücks an der Werkzeugmaschine erfolgt.

Dabei können nacheinander alle notwendigen Bearbeitungsschritte am herzustellenden Werkzeuggrundkörper vorgenommen werden, ohne dabei das zu bearbeitende Werkstück aus der Aufspannung heraus in eine andere, zusätzliche Maschine einsetzen zu müssen oder das zu bearbeitende Werkstück innerhalb der einen Werkzeugmaschine umzuspannen.

Dies hat zur Folge, dass diverse zusätzliche Einrichtzeiten, sei es die der zusätzlichen Maschine oder die durch das Umspannen des zu bearbeitenden Werkstücks innerhalb der einen Werkzeugmaschine, vollständig entfallen. Auch wird die Maßhaltigkeit des entstehenden Werkzeuggrundkörpers verbessert, da durch den Verbleib des zu bearbeitenden Werkstücks in seiner ursprünglichen Aufspannung die Referenzpunkte am Werkstück nicht verloren gehen. Somit kann die Werkzeug tragende Arbeitsspindel mit sehr hoher Präzision die Kühlkanäle an ihre dafür vorgesehenen Stellen setzen.

Das Verfahren lässt sich in vorteilhafter Weise so weiterbilden, dass das Herausarbeiten von einer oder mehreren Spannuten des herzustellenden Werkzeuggrundkörpers, das Herausarbeiten von einem oder mehreren Plattensitzen des herzustellenden Werkzeuggrundkörpers, das Herausarbeiten von einem oder mehreren Kühlkanälen des herzustellenden Werkzeuggrundkörpers, das Herausarbeiten von einer oder mehreren Fasen des herzustellenden Werkzeuggrundkörpers, das Herausarbeiten von einem oder mehreren Freiwinkeln des herzustellenden Werkzeuggrundkörpers, und/oder das Herausarbeiten von einem oder mehreren Schneidkanten des herzustellenden Werkzeuggrundkörpers jeweils mittels unterschiedlicher Werkzeuge, insbesondere Schleifwerkzeuge, ausgeführt wird.

Dabei sind die einzelnen Bearbeitungsschritte, um alle notwendigen Aussparungen in das zu bearbeitende Werkstück einzubringen, nicht auf ein Werkzeug beschränkt. Vielmehr können dabei unterschiedlichste Werkzeuge wie Schleifscheiben unterschiedlichen Durchmessers und Breite sowie Schleifstifte unterschiedlichen Durchmessers und Länge verwendet werden.

Das Verfahren kann in besonders vorteilhafter Weise durch folgende Schritte weitergebildet werden: Auswechseln des Werkzeughalters gegen einen zweiten, ein anderes Werkzeug haltenden Werkzeughalter, wobei der zweite Werkzeughalter einen zweiten Schwingungserzeuger zum Erzeugen einer Schwingung des anderen Werkzeugs umfasst, und Bearbeiten des an der Werkzeugmaschine eingespannten Werkstücks aus Hartmetall mit dem an dem zweiten Werkzeughalter gehaltenen, schwingenden anderen Werkzeug zum Herausarbeiten von einer oder mehreren weiteren Aussparungen an dem Werkstück zur Herstellung des Werkzeuggrundkörpers.

Hierbei kann im beschriebenen Verfahren der zu verwendende Werkzeughalter mit Werkzeug und entsprechendem Schwingungserzeuger getauscht werden, auch während das Werkstück in seiner Aufspannung verbleibt. Dies hat den Vorteil, dass das Werkzeug und auch der Schwingungserzeuger auf entsprechende Bearbeitungsbedingungen durch einen Wechsel angepasst werden können, ohne dass ein Wechsel in eine andere Werkzeugmaschine oder ähnlichem notwendig ist. Das Werkstück kann dabei wieder in seiner Aufspannung verbleiben und seine Referenzpunkte können für die weitere Bearbeitung bestehen bleiben.

Das Verfahren kann vorteilhafterweise so weitergebildet werden, dass mit dem anderen Werkzeug eine oder mehrere Spannuten herausgearbeitet werden, insbesondere nachdem mit dem zuvor eingewechselten Werkzeug ein oder mehrere Plattensitze, ein oder mehrere Kühlkanäle, eine oder mehrere Fasen, ein oder mehrere Freiwinkel und/oder eine oder mehrere Schneidkanten herausgearbeitet wurden, mit dem anderen Werkzeug ein oder mehrere Plattensitze herausgearbeitet werden, insbesondere nachdem mit dem zuvor eingewechselten Werkzeug ein oder mehrere Kühlkanäle, eine oder mehrere Spannuten, eine oder mehrere Fasen, ein oder mehrere Freiwinkel und/oder eine oder mehrere Schneidkanten herausgearbeitet wurden, mit dem anderen Werkzeug ein oder mehrere Kühlkanäle herausgearbeitet werden, insbesondere nachdem mit dem zuvor eingewechselten Werkzeug eine oder mehrere Spannuten, ein oder mehrere Plattensitze, eine oder mehrere Fasen, ein oder mehrere Freiwinkel und/oder eine oder mehrere Schneidkanten herausgearbeitet wurden, mit dem anderen Werkzeug eine oder mehrere Fasen herausgearbeitet werden, insbesondere nachdem mit dem zuvor eingewechselten Werkzeug ein oder mehrere Plattensitze, ein oder mehrere Kühlkanäle, eine oder mehrere Spannuten, ein oder mehrere Freiwinkel und/oder eine oder mehrere Schneidkanten herausgearbeitet wurden, mit dem anderen Werkzeug ein oder mehrere Freiwinkel herausgearbeitet werden, insbesondere nachdem mit dem zuvor eingewechselten Werkzeug ein oder mehrere Kühlkanäle, eine oder mehrere Spannuten, eine oder mehrere Fasen, ein oder mehrere Plattensitze und/oder eine oder mehrere Schneidkanten herausgearbeitet wurden, oder mit dem anderen Werkzeug eine oder mehrere Schneidkanten herausgearbeitet werden, insbesondere nachdem mit dem zuvor eingewechselten Werkzeug eine oder mehrere Spannuten, ein oder mehrere Plattensitze, eine oder mehrere Fasen, ein oder mehrere Freiwinkel und/oder ein oder mehrere Kühlkanäle herausgearbeitet wurden.

Ein großer Vorteil in dem Verfahren liegt darin, dass die Bearbeitung des Werkstücks für das Einarbeiten der jeweiligen Aussparungen in keiner definierten Reihenfolge erfolgen muss. Vielmehr kann je nach den Anforderungen des herzustellenden Werkzeuggrundkörpers eine Reihenfolge der Bearbeitungsstufen frei gewählt werden, was zusätzlich die Flexibilität und im Ergebnis die Produktivität des Herstellungsprozesses steigert.

Eine vorteilhafte Weiterbildung des Verfahrens liegt darin, dass das Auswechseln des Werkzeug haltenden Werkzeughalters an der Werkzeugaufnahme der Arbeitsspindel der Werkzeugmaschine durch eine dafür eingerichtete Werkzeugwechseleinrichtung durchgeführt wird.

Dadurch ist es möglich, den Werkzeughalter mit Werkzeug und Schwingungserzeuger voll-oder halbautomatisch zu wechseln. Zusätzlich erhöht eine solche Werkzeugwechseleinrichtung die Bedienersicherheit, da dieser bei manuellem Werkzeugwechsel und Hantieren in der Werkzeugmaschine durch vorhandene Metallspäne oder vorstehende Grate am Werkstück verletzt werden kann.

Zusätzlich kann das Verfahren vorteilhaft weitergebildet werden, indem ein Auswechseln des Werkstücks an der Aufspannung der Werkzeugmaschine durch eine dafür eingerichtete Werkstückwechseleinrichtung durchgeführt wird.

Die Werkstückwechseleinrichtung unterstützt zusätzlich die Automatisierung des Bearbeitungsprozesses und kann dafür genutzt werden, bereits bearbeitete Werkzeuggrundkörper gegen noch unbearbeitete oder nur teilweise bearbeitete Werkstücke (oder Rohteile / Rohlinge) auszuwechseln, damit diese (weiter) bearbeitet werden können. Zudem erhöht eine solche Einrichtung wie auch bereits die vorgenannte Werkzeugwechseleinrichtung die Sicherheit des Bedieners aus den bereits genannten Gründen.

Das Verfahren kann vorteilhaft so weitergebildet werden, dass die numerisch gesteuerte Werkzeugmaschine mindestens fünf numerisch steuerbare Achsen aufweist.

Um eine möglichst effiziente Bearbeitung des herzustellenden Werkzeuggrundkörpers zu erzielen und auch an nur schwer zugänglichen Stellen des herzustellenden Werkzeuggrundkörpers heranzukommen, empfiehlt es sich, dass die Werkzeugmaschine mindestens fünf voneinander unabhängig numerisch steuerbare Achsen aufweist.

Eine erfindungsgemäße Steuervorrichtung einer numerisch gesteuerten Werkzeugmaschine mit werkzeugtragender Arbeitsspindel und einem Werkzeug haltenden Werkzeughalter, der an einer Werkzeugaufnahme der Arbeitsspindel aufnehmbar ist, ist dazu eingerichtet, an der Werkzeugmaschine ein Verfahren zum Bearbeiten eines Werkstücks aus Hartmetall für die Herstellung eines Werkzeuggrundkörpers an einer numerisch gesteuerten Werkzeugmaschine mit werkzeugtragender Arbeitsspindel zu steuern.

Durch die erfindungsgemäße Steuervorrichtung kann das vorher beschriebene Verfahren in all seinen Weiterbildungen an der Werkzeugmaschine ausgeführt und gesteuert werden.

Die Steuervorrichtung kann durch folgende Merkmale vorteilhaft weitergebildet werden: ein Bedienpult, das dazu eingerichtet ist, dem herzustellenden Werkzeuggrundkörper zugeordnete Daten über das Bedienpult manuell einzugeben.

Dies eröffnet dem Anwender die Möglichkeit, auf direkte Weise für die Bearbeitung des Werkstücks relevante Daten in die Steuervorrichtung einzugeben und entsprechend die Bearbeitungsschritte händisch anzupassen.

Dabei kann die Steuervorrichtung vorteilhafterweise dadurch weitergebildet werden, dass das Bedienpult dazu eingerichtet ist, dass die manuelle Eingabe der dem herzustellenden Werkzeuggrundkörper zugeordneten Daten als Datensatz eine menügeführte, manuelle Eingabe der dem herzustellenden Werkzeuggrundkörper zugeordneten Daten als Datensatz umfasst.

Die menügeführte, manuelle Eingabe hilft dem Anwender, die entsprechenden Daten in einer logisch aufgebauten Reihenfolge einzugeben und sie in eine für die Steuervorrichtung lesbaren Art aufzubereiten. Das spart dem Anwender Zeit und ermöglicht es auch, dass Anwender mit geringeren EDV- bzw. CNC-Programmiersprachen-Kenntnissen dem Werkzeuggrundkörper zugeordnete Daten in die Steuervorrichtung eingeben und somit den Herstellungsprozess anpassen können.

Die Steuervorrichtung kann durch folgende Merkmale vorteilhaft weitergebildet werden: eine Schnittstelle, die dazu eingerichtet ist, einen dem Werkzeuggrundkörper zugeordneten Datensatz zu empfangen.

Dies eröffnet dem Anwender die Möglichkeit, auf schnelle und effiziente Weise für die Bearbeitung des Werkstücks relevante Daten an die Steuervorrichtung zu senden und entsprechend die Bearbeitungsschritte durch die empfangenen Daten anzupassen.

Die Steuervorrichtung kann vorteilhaft dadurch weitergebildet werden, dass der Datensatz Parameter betreffend eine Geometrie des herzustellenden Werkzeuggrundkörpers und optional zulässige Toleranzbereiche der Geometrie des herzustellenden Werkzeuggrundkörpers umfasst.

Weiterhin kann die Steuervorrichtung vorteilhaft dadurch weitergebildet werden, dass der Datensatz Modelldaten umfasst, die ein dreidimensionales Geometriemodell des herzustellenden Werkzeuggrundkörpers angeben und/oder der Datensatz Materialdaten umfasst, die Materialeigenschaften des herzustellenden Werkzeuggrundkörpers angeben.

Durch die Schnittstelle der Steuervorrichtung und der Ausgestaltung des Datensatzes mit verschiedensten Parametern kann die Anpassung des Bearbeitungsverfahrens zur Herstellung eines Werkzeuggrundkörpers in schneller und effizienter Weise durchgeführt werden.

Eine besonders vorteilhafte Weiterbildung der Steuervorrichtung ergibt sich dadurch, dass die Steuervorrichtung dazu eingerichtet ist, den dem Werkzeuggrundkörper zugeordneten Datensatz durch Empfang oder manuelle Eingabe zu erhalten und das Verfahren zum Bearbeiten eines Werkstücks aus Hartmetall für die Herstellung eines Werkzeuggrundkörpers an einer numerisch gesteuerten Werkzeugmaschine mit werkzeugtragender Arbeitsspindel auf Grundlage des empfangenen Datensatzes oder des manuell über das Bedienpult eingegebenen Datensatzes halbautomatisch oder vollautomatisch an der Werkzeugmaschine zu steuern.

Durch den Einsatz einer weitestgehend automatisierten Steuerung der Werkzeugmaschine sowie des Einsatzes von automatisierbaren Einrichtungen wie der Werkzeugwechseleinrichtung kann das Verfahren zur Herstellung eines Werkzeuggrundkörpers ebenso weitestgehend automatisiert werden, was die Effizienz dieser Herstellung bzw. Fertigung weiter steigert.

Ein erfihdungsgemäßes Computerprogrammprodukt mit einem auf einem computerlesbaren Datenspeichermedium gespeicherten Computerprogramm, das ausführbar ist an einer numerischen Steuervorrichtung einer numerisch gesteuerten Werkzeugmaschine mit werkzeugtragender Arbeitsspindel und einem Werkzeug haltenden Werkzeughalter, der an einer Werkzeugaufnahme der Arbeitsspindel aufnehmbar ist, oder in einem mit der Steuervorrichtung der numerisch gesteuerten Werkzeugmaschine verbundenen Computer, und das dazu eingerichtet ist, an der Werkzeugmaschine ein Verfahren zum Bearbeiten eines Werkstücks aus Hartmetall für die Herstellung eines Werkzeuggrundkörpers an einer numerisch gesteuerten Werkzeugmaschine mit werkzeugtragender Arbeitsspindel zu steuern.

Durch das erfindungsgemäße Computerprogrammprodukt kann das vorher beschriebene Verfahren in all seinen Weiterbildungen an der Werkzeugmaschine mit der Steuervorrichtung ausgeführt und gesteuert werden.

Zusammenfassend kann mit dem beschriebenen Verfahren ein Werkzeuggrundkörper aus einem Werkstück aus Hartmetall in einer Werkzeugmaschine (z.B. einer Universal-Maschine) hergestellt werden, wobei das Werkstück bei allen Bearbeitungsschritten in seiner Aufspannung verbleiben kann, während teils aufwendige Aussparungen wie beispielsweise Kühlkanäle in den herzustellenden Werkzeuggrundkörper eingearbeitet werden, da die Werkzeugmaschine über ein entsprechendes Materialabtrag unterstützendes System verfügt, welches gleichzeitig die Prozesskräfte während der Bearbeitung des Werkstücks reduziert und somit den Verschleiß des Werkzeugs beim Einsatz an hartmetallenen Werkstoffen erheblich senkt.

Weitere Aspekte und deren Vorteile als auch Vorteile und speziellere Ausführungsmöglichkeiten der vorstehend beschriebenen Aspekte und Merkmale werden aus den folgenden, jedoch in keiner Weise einschränkend aufzufassenden Beschreibungen und Erläuterungen zu den angehängten Figuren beschrieben.

### KURZBESCHREIBUNG DER FIGUREN

- Fig. 1: zeigt beispielhaft einen Werkzeughalter in Schnittansicht, der in dem erfindungsgemäßen Verfahren gemäß Ausführungsbeispielen eingesetzt werden kann;
- Fig. 2a: zeigt beispielhaft einen Werkzeug haltenden Werkzeughalter, der in dem erfindungsgemäßen Verfahren gemäß Ausführungsbeispielen eingesetzt werden kann;
- Fig. 2b: zeigt beispielhaft einen Werkzeug haltenden Werkzeughalter in Bearbeitung eines Werkstücks aus Hartmetall für die Herstellung eines Werkzeuggrundkörpers, der in dem erfindungsgemäßen Verfahren gemäß Ausführungsbeispielen eingesetzt werden kann;
- Fig. 3a: zeigt beispielhaft einen bearbeiteten Werkzeuggrundkörper mit Spannuten, Plattensitzen und Kühlkanälen, der durch das erfindungsgemäße Verfahren hergestellt wurde;
- Fig. 3b: zeigt beispielhaft einen durch das erfindungsgemäße Verfahren bearbeiteten Werkzeuggrundkörper in Schnittansicht mit Spannuten, Plattensitzen und Kühlkanälen;
- Fig. 4: zeigt beispielhaft eine schematische Darstellung einer Werkzeugmaschine mit einem Werkzeughalter, welche in dem erfindungsgemäßen Verfahren gemäß Ausführungsbeispielen eingesetzt werden kann;

### DETAILLIERTE BESCHREIBUNG DER FIGUREN UND BEVORZUGTER AUSFÜHRUNGSBEISPIELE DER VORLIEGENDEN ERFINDUNG

Im Folgenden werden Beispiele bzw. Ausführungsbeispiele der vorliegenden Erfindung detailliert unter Bezugnahme auf die beigefügten Figuren beschrieben. Gleiche bzw. ähnliche Elemente in den Figuren können hierbei mit gleichen Bezugszeichen bezeichnet sein, manchmal allerdings auch mit unterschiedlichen Bezugszeichen.

Es sei hervorgehoben, dass die vorliegende Erfindung jedoch in keiner Weise auf die im Folgenden beschriebenen Ausführungsbeispiele und deren Ausführungsmerkmale begrenzt bzw. eingeschränkt ist, sondern weiterhin Modifikationen der Ausführungsbeispiele umfasst, insbesondere diejenigen, die durch Modifikationen der Merkmale der beschriebenen Beispiele bzw. durch Kombination einzelner oder mehrerer der Merkmale der beschriebenen Beispiele im Rahmen des Schutzumfanges der unabhängigen Ansprüche umfasst sind.

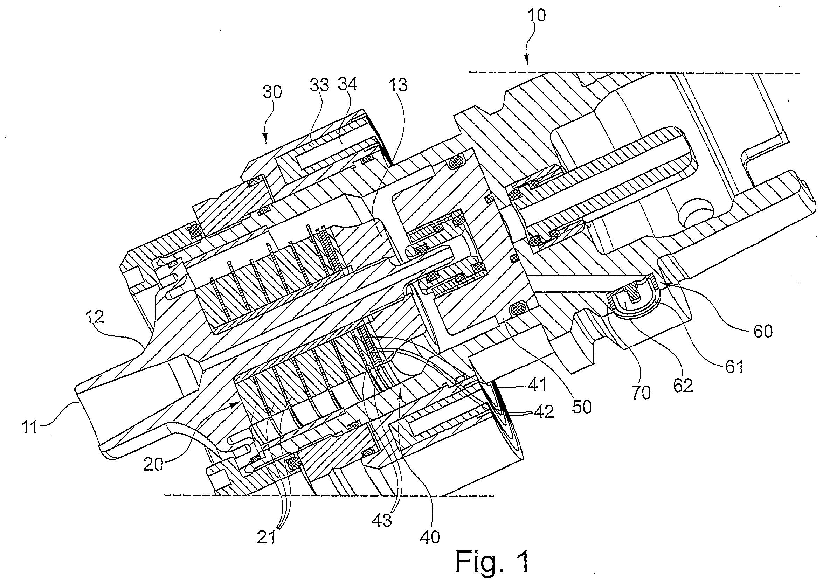

Fig. 1 zeigt beispielhaft einen beispielhaften Aufbau eines Werkzeughalters 10, der in dem erfindungsgemäßen Verfahren eingesetzt werden kann.

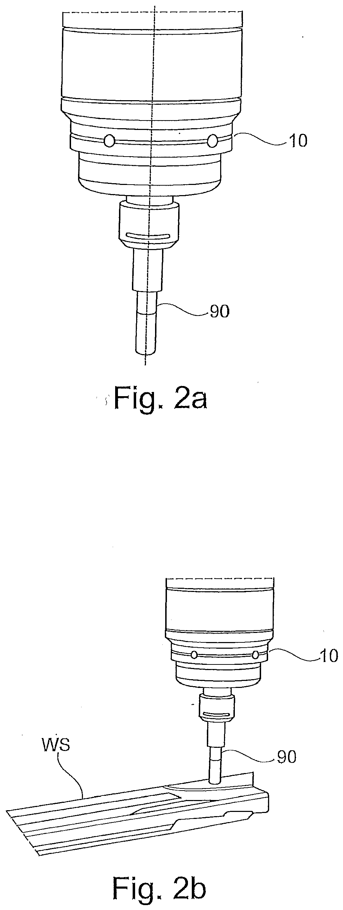

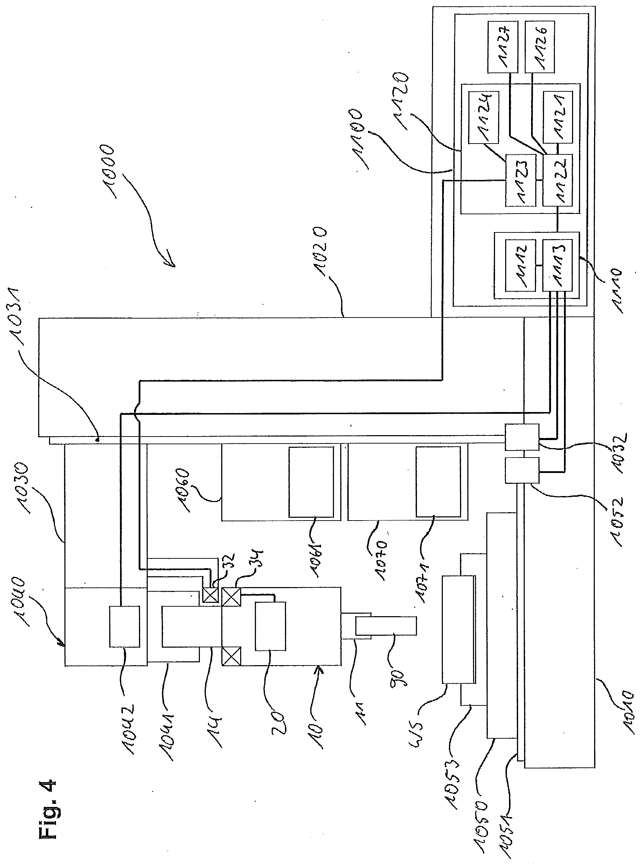

An einem Ende des Werkzeughalters 10 befindet sich ein Werkzeugaufnahmeabschnitt 11 zur Aufnahme eines Werkzeugs 90 (in Fig. 1 nicht gezeigt, siehe Fig. 2a, 2b und 4). Im Werkzeughalter 10 sind beispielhaft mehrere, z. B. sechs lochscheibenförmige erste Piezo-Elemente 21 beispielhaft gestapelt angeordnet, die beispielhaft über einen Übertragungsabschnitt 12 mit dem Werkzeugaufnahmeabschnitt 11 verbunden sind und beispielhaft einen Schwingungserzeuger 20 (Ultraschall-Erzeuger/Aktuator) zur Umwandlung einer elektrischen Spannung in eine mechanische Schwingung (z.B. mit einer Frequenz im Ultraschallbereich) bilden.

Über den Übertragungsabschnitt 12 wird beispielhaft die mechanische Schwingung der ersten Piezo-Elemente 21 auf das Werkzeug 90 übertragen. Die ersten Piezo-Elemente 21 können beispielsweise als Piezokeramikscheiben mit dazwischen angebrachten Elektroden ausgebildet sein.

Die Energieversorgung bzw. Ansteuerung des Schwingungserzeugers 20 erfolgt beispielhaft über einen Transformator (erster Transformator), der beispielhaft maschinenseitig einen ersten Schalenkern 31 und eine Primärwicklung 32 (Sendereinheit/Senderspule) umfasst (in Fig. 1 nicht gezeigt) und beispielhaft werkzeugseitig einen zweiten Schalenkern 33 und eine Sekundärspule 34 (Empfängereinheit/Empfängerspule) umfasst, die beispielhaft als Ringelemente an der Außenseite des Werkzeughalters 10 angeordnet sind.

Auf einer dem Werkzeugaufnahmeabschnitt 11 abgewandten Seite des Stapels aus ersten Piezo-Elementen 21 ist beispielhaft ein lochscheibenförmiges piezoelektrisches Sensorelement 40 angeordnet, das beispielhaft ein Piezo-Element 41 und zwei Kontakte 42 umfasst und das beispielhaft mechanisch mit den ersten Piezo-Elementen 21 gekoppelt ist, aber durch ein Isolierungselement 43, das aus einer Keramik-Lochscheibe bestehen kann, elektrisch von den ersten Piezo-Elementen 21 isoliert ist. Durch ein weiteres Isolierungselement 43 ist das piezoelektrische Sensorelement 40 beispielhaft von einem Befestigungselement 13, z.B. einer Befestigungsmutter, elektrisch isoliert.

Das Befestigungselement 13 dient der Befestigung des piezoelektrischen Sensorelements 40 am Schwingungserzeuger 20 (Ultraschall-Erzeuger/Aktuator) sowie der Vorspannung der ersten Piezo-Elemente 21 wegen der dynamischen Belastung.

Die ersten Piezo-Elemente 21 und das piezoelektrische Sensorelement 40 sind gleich orientiert, wodurch zum einen die Erzeugung und die Detektion der Schwingung in der gleichen Richtung ermöglicht wird und zum Anderen eine platzsparende Anordnung der Elemente im Werkzeughalter 10 erreicht wird.

Das piezoelektrische Sensorelement 40 wandelt die mechanischen Schwingungen des schwingungsfähigen Systems, das das Werkzeug 90, den Übertragungsabschnitt 12, den Schwingungserzeuger 20 und das piezoelektrische Sensorelement 40 umfasst, in ein Sensorsignal um, das beispielhaft als elektrische Spannung über eine Drahtverbindung 50 von dem piezoelektrischen Sensorelement 40 durch den Werkzeughalter 10 zu einem Senderelement an der Außenseite des Werkzeughalters 10 übertragen wird.

Von dem Senderelement 61 und 62 an einer Bohrung 70 wird das Sensorsignal beispielhaft berührungslos zu einem maschinenseitigen Empfängerelement (in Fig. 1 nicht gezeigt) übertragen.

Das Senderelement 61 und 62 ist z.B. Teil eines weiteren Transformators (zweiter Transformator) und umfasst beispielhaft einen ersten Ferritkern und eine Primärwicklung; das Empfängerelement ist ebenfalls Teil des zweiten Transformators und umfasst einen zweiten Ferritkern und eine Sekundärwicklung. Jedoch ist es auch möglich, ein optisches Senderelement vorzusehen.

Somit kann das Sensorsignal induktiv vom Werkzeughalter 10 zu einer maschinenseitigen Sensorsignal-Auswertevorrichtung übertragen werden.

Fig. 2a zeigt beispielhaft einen Werkzeug 90 (hier Schleifstift) haltenden Werkzeughalter 10, der in dem erfindungsgemäßen Verfahren eingesetzt werden kann.

Das Werkzeug 90 wird über den Werkzeugaufnahmeabschnitt 11 mit dem Werkzeughalter 10 verbunden. Die daraus entstehende Einheit kann in eine Werkzeugaufnahme 1041 einer Arbeitsspindel 1040 einer Werkzeugmaschine 1000 (jeweils in Fig. 2a nicht gezeigt, siehe Fig. 4) aufgenommen werden. Die Aufnahme dieser Einheit kann sowohl manuell als auch automatisiert durch eine Werkzeugwechseleinrichtung 1060 (in Fig. 2a nicht gezeigt, siehe Fig. 4) erfolgen.

Fig. 2b zeigt beispielhaft einen Werkzeug 90 (hier Schleifstift) haltenden Werkzeughalter 10 in Bearbeitung eines Werkstücks WS aus Hartmetall für die Herstellung eines Werkzeuggrundkörpers, der in dem erfindungsgemäßen Verfahren eingesetzt werden kann.

Das Werkzeug 90 und der Werkzeughalter 10 bilden dabei wieder eine Einheit, wobei das Werkzeug 90 durch den Schwingungserzeuger 20 (in Fig. 2b nicht gezeigt, siehe Fig. 1) in Schwingung versetzt wird um die Abtragrate am Werkstück WS zu erhöhen und dabei die Prozesskräfte und dadurch den Werkzeugverschleiß zu minimieren.

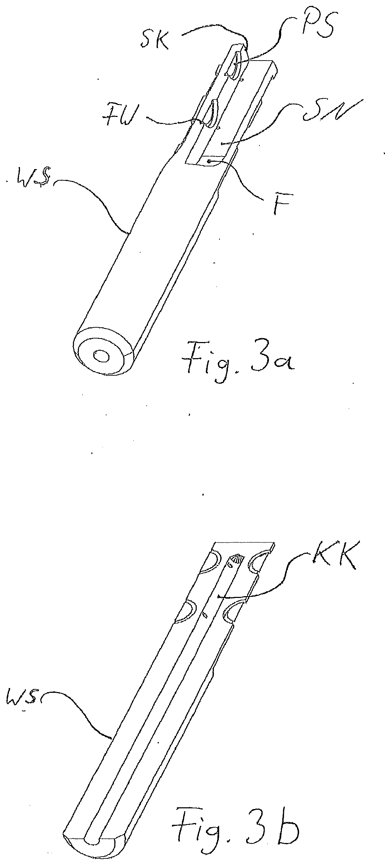

Fig. 3a zeigt beispielhaft einen bearbeiteten Werkzeuggrundkörper mit Spannuten SN, Plattensitzen PS und Kühlkanälen KK, der durch das erfindungsgemäße Verfahren hergestellt wurde.

Hierbei können sehr gut die durch das Werkzeug 90 herausgearbeiteten Plattensitze PS und Spannuten SN erkannt werden, die typischerweise bei Werkzeuggrundkörpern erzeugt werden. Sie dienen der Montagemöglichkeit von Schneiden (z.B. Wendeschneidplatte) und später, beim Einsatz des Werkzeuggrundkörpers mit Schneiden in z.B. Werkzeugmaschinen, für das Abführen der anfallenden Späne während der Bearbeitung von Werkstücken. Die in Fig. 3a gezeigten, herausgearbeiteten Aussparungen wie Plattensitze PS, Spannuten SN und Kühlkanäle KK können durch Fasen F, Freiwinkel FW und/oder Schneidkanten SK ergänzt werden.

Fig. 3b zeigt beispielhaft einen durch das erfindungsgemäße Verfahren bearbeiteten Werkzeuggrundkörper in Schnittansicht mit Spannuten SN, Plattensitzen PS und Kühlkanälen KK.

Hierbei können besonders gut die eingearbeiteten Kühlkanäle KK gesehen werden, die sich in einen Hauptkanal größeren Durchmessers (entlang der Mittenachse des Werkzeuggrundkörpers/Werkstücks) und in Seitenkanäle kleineren Durchmessers (sich vom Hauptkanal abzweigend) unterteilen lassen.

Fig. 4 zeigt beispielhaft eine schematische Darstellung einer Werkzeugmaschine mit einem Werkzeughalter, welche in dem erfindungsgemäßen Verfahren gemäß Ausführungsbeispielen eingesetzt werden kann.

Die Werkzeugmaschine 1000 kann z.B. als numerisch steuerbare Fräs- und/oder Schleifmaschine, numerisch steuerbare Universal-Fräs- und/oder-Schleifmaschine bzw. als numerisch steuerbares Bearbeitungszentrum ausgebildet sein. Zur Steuerung einer Relativbewegung zwischen Werkzeug und Werkstück kann die Werkzeugmaschine eine Mehrzahl von steuerbaren Linearachsen (in der Regel z.B. X-Achse, Y-Achse und/oder Z-Achse genannt) und/oder eine oder mehrere Rund- bzw. Drehachsen (in der Regel z.B. A-Achse, B-Achse und/oder C-Achse genannt) aufweisen.

Beispielhaft weist die Werkzeugmaschine 1000 ein Maschinenbett 1010, einen Maschinenständer 1020 und einen Spindelkopf 1030 auf, wobei das Maschinenbett 1010 beispielhaft einen Werkstücktisch 1050 trägt und der Spindelkopf 1030 beispielhaft eine Arbeitsspindel 1040 trägt. Ferner kann die Werkzeugmaschine 1000 eine Werkzeugwechseleinrichtung 1060 sowie eine Werkstückwechseleinrichtung 1070 oder eine Kombination aus Werkzeugwechsel- und Werkstückwechseleinrichtung aufweisen.

Der Werkzeugtisch 1050 ist beispielhaft auf horizontalen Linearführungen 1050, die auf dem Maschinenbett 1010 in einer horizontalen Richtung angeordnet sind, in der horizontalen Richtung linear verfahrbar gelagert und ist über einen Linearantrieb 1052 einer ersten Linearachse der Werkzeugmaschine 1000 verfahrbar steuerbar. Auf dem Werkzeugtisch ist beispielhaft ein Werkstück WS in einer Werkstückspanneinrichtung 1053 eingespannt.

Der Spindelkopf 1030 ist beispielhaft auf vertikalen Linearführungen 1050, die an dem Maschinenständer 1020 in einer vertikalen Richtung angeordnet sind, in der vertikalen Richtung linear verfahrbar gelagert und ist über einen Linearantrieb 1032 einer zweiten Linearachse der Werkzeugmaschine 1000 verfahrbar steuerbar, so dass auch die Arbeitsspindel 1040, an der ein ein Werkzeug 90 haltender Werkzeughalter 10 aufgenommen ist, vertikal verfahrbar ist.

In weiteren Ausführungsbeispielen können noch ein oder mehr weitere Linearachsen vorgesehen sein, z.B. um zusätzlich eine Linearbewegung des Werkstücks relativ zu dem Werkzeug in einer Richtung senkrecht zur Zeichnungsebene der Fig. 4 zu ermöglichen.

Des Weiteren können ein oder mehrere Dreh- bzw. Rundachsen vorgesehen sein, so z.B. eine Rundachse mit einem Rundachsantrieb zum Rotieren des Werkzeugtisches 1050 (sog. Drehtisch).

Mittels der vorbeschriebenen Linear- und ggf. Rund bzw. Drehachsen bzw. deren Antriebe kann eine Relativbewegung des Werkzeugs 90 relativ zu dem Werkstücks WS gesteuert werden.

Hierzu weist eine Steuervorrichtung 1100 der Werkzeugmaschine 1000 eine Maschinensteuerungseinrichtung 1110 auf, die beispielhaft eine CNC- bzw. NC-Steuerungseinrichtung 1112 umfasst, die dazu eingerichtet ist, z.B. auf Basis von in einer Speichervorrichtung 111 gespeicherten NC-Daten, die Funktionen bzw. Bearbeitungsprozesse an der Werkzeugmaschine 1000 zu steuern. Zudem weist die Maschinensteuerungseinrichtung 1110 beispielhaft eine PLC- bzw. SPS-Einrichtung 1113 auf ("PLC" für Programmable Logic Controller bzw. "SPS" für Speicherprogrammierbare Steuerung).

Die PLC- bzw. SPS-Einrichtung 1113 ist insbesondere bevorzugt dazu eingerichtet, auf Basis von Steuerbefehlen der NC-Steuerungseinrichtung 1112 oder auch ggf. autark von der NC-Steuerungseinrichtung 1112 Steuersignale an Aktoren der Werkzeugmaschine zu übersenden, so z.B. an die Linearantriebe 1052 bzw. 1032 der Linearachsen bzw. generell an Antriebe der Maschinenachsen oder auch an den Spindelantrieb 1042 der Arbeitsspindel 1040.

Zudem ist die PLC- bzw. SPS-Einrichtung 1113 dazu eingerichtet, Sensorsignale von Positionsmesssensoren (nicht gezeigt) der Werkzeugmaschine 1000, die in Echtzeit bei der Bearbeitung gemessene Ist-Positionen der Antriebe und/oder Maschinenachsen angeben, zu empfangen oder auszulesen und ggf. an die NC-Steuerungseinrichtung 1112 weiterzugeben. Die PLC- bzw. SPS-Einrichtung 1113 kann auch dazu eingerichtet sein, anderen maschineninternen oder-externen Einrichtungen bzw. Vorrichtungen zu ermöglichen, Positionsdaten an der PLC- bzw. SPS-Einrichtung 1113 auszulesen, die die Ist-Positionen der Antriebe und/oder Maschinenachsen angeben.

Die Arbeitsspindel 1040 weist neben dem vorstehend bereits erwähnten Spindelantrieb 1042 weiterhin eine Werkzeugaufnahme 1041 (Werkzeugaufnahmeabschnitt) auf, an der der Werkzeughalter 10 aufgenommen ist und mittels des Spindelantriebs 1042 rotatorisch angetrieben werden kann (insbesondere zur Erzeugung der Schnitt- bzw. Schleifbewegung).

Der Werkzeughalter 10 ist lediglich schematisch dargestellt und weist beispielhaft einen Werkzeugschnittstellenkörper 14 (z.B. ein Werkzeugkegel, bzw. Steil- oder Hohlschaftkegel, oder auch ein Morsekegel oder andere Werkzeugschnittstellen) auf, mit dem der Werkzeughalter 10 an der Werkzeugaufnahme 1041 der Arbeitsspindel 1040 aufgenommen ist. Beispielweise kann der Werkzeughalter 10 analog zu Fig. 1 aufgebaut sein.

Der Werkzeughalter 10 weist beispielhaft eine induktive Empfängereinheit 32 (z.B. analog zu der Sekundärspule bzw. -wicklung 34 der Fig. 1) auf zum kontaktlosen bzw. induktiven Empfangen eines Steuersignals von der Sendereinheit 32 (Primärspule bzw. -wicklung), die an dem Spindelkopf 1030 (bzw. an der Spindel) angebracht ist.

Beispielhaft weist der Werkzeughalter 10 weiterhin einen Aktuator 20 (z.B. Ultraschallwandler bzw. Ultraschallerzeuger, ggf. beispielhaft umfassend eines oder mehrere Piezoelemente) auf, der dazu eingerichtet ist, auf Basis des Steuersignals den Werkzeughalter 10 bzw. das in dem Werkzeughalter 10 aufgenommene Werkzeug 90 in eine Schwingung zu versetzen, bevorzugt insbesondere im Ultraschallbereich, d.h. insbesondere bei Ultraschallfrequenzen bzw. bei Frequenzen über 10 kHz bzw. insbesondere z.B. über 15 kHz, z.B. bis zu 60 kHz.

Der Werkzeughalter 10 weist zudem den Werkzeugaufnahmeabschnitt 11 auf, an dem das Werkzeug 90 aufgenommen bzw. gehalten ist, wobei das Werkzeug 90 über den Spindelantrieb 1042 rotierend angetrieben wird.

Zum Antreiben des Aktuators 20 bzw. zum Steuern der Schwingung des Werkzeugs 90 weist die Steuervorrichtung 1100 der Werkzeugmaschine 1000 eine weitere Steuereinrichtung 1120 auf, die das Steuersignal erzeugt und über die Sendereinheit 32 an den Werkzeughalter 10 zum Übertragen an die Empfängereinrichtung 34 für den Aktuator 20 ausgibt. Die Steuereinrichtung 1120 kann in weiteren Ausführungsbeispielen auch in der Maschinensteuerungseinrichtung 1110 integriert sein und/oder eine externe Datenverarbeitungsvorrichtung, z.B. einen Computer, umfassen bzw. durch eine extern angeschlossene Datenverarbeitungsvorrichtung, z.B. einen Computer, ausgebildet sein.

Die Steuereinrichtung 1120 umfasst beispielhaft einen Generator 1124 zum Erzeugen des hochfrequenten Trägersignals. Das hochfrequente Trägersignal kann z.B. ein im Wesentlichen periodisches bzw. bevorzugt im Wesentlichen sinusförmiges Trägersignal sein, das bevorzugt eine festgelegte Frequenz und/oder eine festgelegte Amplitude aufweist. Die Frequenz des Trägersignals ist hochfrequent (d.h. insbesondere mit einer Frequenz größer 10 kHz, bevorzugt größer 15 kHz) und liegt bevorzugt im Ultraschallbereich.

Die Steuereinrichtung 1120 umfasst beispielhaft weiterhin eine Speichereinrichtung 1121 zum Speichern von Geometriedaten, Toleranzwerte der Geometrie, Modelldaten und Materialdaten des herzustellenden Werkzeuggrundkörpers.

Die Steuereinrichtung 1120 umfasst beispielhaft weiterhin eine Datenverarbeitungseirichtung 1122, die dazu eingerichtet ist, die Daten aus der Speichereinrichtung 1121 auszulesen und zudem von der Maschinensteuereinrichtung 1110 Positionen, insbesondere Achsenpositionen, auslesen kann. Dies kann bevorzugt in Echtzeit während der Bearbeitung des Werkstücks WS erfolgen, wobei bevorzugt einerseits aktuelle Ist-Positionen der Achsen und Antriebe der Werkzeugmaschine 1000 z.B. aus der PLC- bzw. SPS-Steuereinrichtung 1113 (und/oder von der NC-Steuerung 1112) in Echtzeit ausgelesen werden können, oder andererseits aktuelle Sollpositionen aus der NC-Steuerung 1112 auslesen kann.

Insbesondere ist die Datenverarbeitungseinrichtung 1122 auf Basis der ausgelesenen Positionsdaten der Maschinensteuerung bevorzugt dazu eingerichtet, die Position des Werkzeugs 90 relativ zu dem Werkstück WS zu berechnen.

Alternativ ist es auch möglich, dass die Position des Werkzeugs 90 in der NC-Steuerung 1112 berechnet wird und von der Datenverarbeitungseinrichtung 1122 ausgelesen wird.

Auf Basis der berechneten oder ausgelesenen Position des Werkzeugs 90 relativ zu dem Werkstück WS und im Vergleich mit den Daten der Speichervorrichtung 1121 ist die Datenverarbeitungseinrichtung 1122 dazu eingerichtet, eine momentan gewünschte Auslenkung des Werkzeugs 90 auf Grundlage der gewünschten Werkzeuggrundkörper-Geometrie an der aktuellen Werkzeugposition zu bestimmen bzw. zu berechnen und an einen Arbeitssignalerzeuger 1123 als Sollwert abzugeben.

Weiterhin umfasst die Steuereinrichtung 1120 eine Schnittstelle 1126 für das Empfangen von Daten. Dabei können die Daten z.B. einen Datensatz, dem der Werkzeuggrundkörper zugeordnet werden kann, aufweisen, der wiederum z.B. Geometriedaten des herzustellenden Werkzeuggrundkörpers aufweist und/oder zulässige Toleranzwerte/-bereiche für die Fertigung des herzustellenden Werkzeuggrundkörpers aufweist. Auch können z.B. in dem Datensatz weitere, für die Steuerung der Werkzeugmaschine 1000 relevante Daten wie zum Beispiel ein dreidimensionales Modell des herzustellenden Werkzeuggrundkörpers eingefügt sein oder Angaben über das Material des herzustellenden Werkzeuggrundkörpers definiert sein. Die Möglichkeiten der Daten und Informationen, die empfangen werden können, erschöpfen sich durch die vorgenannten Möglichkeiten nicht.

Zudem kann die Schnittstelle 1126 aber auch Daten von der Werkzeugmaschine senden. Dies können zum Beispiel Informationen über Dauer der Bearbeitung oder ausstehende Bearbeitungsschritte, aber auch visuelle Informationen z.B. von einer bildverarbeiteten Einrichtung innerhalb der Werkzeugmaschine umfassen. Es ist aber auch möglich, Informationen z.B. über Werkzeugverschleiß oder Kühl- bzw. Schmiermittelstände (und gegebenenfalls Mängel dieser Prozessmittel) mittels der Schnittstelle 1126 zu versenden. Die Möglichkeiten der Daten und Informationen, die versendet werden können, erschöpfen sich durch die vorgenannten Möglichkeiten nicht.

Dabei ist die Schnittstelle 1126 nicht auf eine Ausführung beschränkt und kann z.B. als USB-Schnittstelle (z.B. für die Nutzung von USB-Sticks als Daten-Transfer-Medium) ausgeführt sein. Weiterhin kann sie als Schnittstelle 1126 zu einem bestehenden Netzwerk verstanden werden und daher sowohl durch Verkabelung (z.B. LAN) als auch kabellos mit dem bestehenden Netzwerk verbunden ausgeführt sein. Auch hier sind die vorgenannten Möglichkeiten für weitere Ausführungsformen der Schnittstelle 1126 nicht erschöpfend.

Weiterhin umfasst die Steuereinrichtung 1120 ein Bedienpult 1127 für das manuelle Eingeben von Daten. Dabei ist es besonders vorteilhaft, wenn die manuelle Eingabe von Daten menügeführt stattfindet. So ist gewährleistet, dass der Anwender nicht zwangsweise über Programmiersprachen-Kenntnisse von z.B. CNC-Steuerungen verfügen muss, um den Herstellungsprozess des herzustellenden Werkzeuggrundkörpers anzupassen.

Die manuell eingegebenen Daten können dabei z.B. Geometriedaten des herzustellenden Werkzeuggrundkörpers aufweisen und/oder zulässige Toleranzwerte/ -bereiche für die Fertigung des herzustellenden Werkzeuggrundkörpers aufweisen. Auch können z.B. in den Daten weitere, für die Steuerung der Werkzeugmaschine 1000 relevante Daten oder Angaben über das Material des herzustellenden Werkzeuggrundkörpers definiert sein. Die Möglichkeiten der Daten und Informationen, die über das Bedienpult manuell eingegeben werden können und somit der Steuereinrichtung 1120 für die Bearbeitung des herzustellenden Werkzeuggrundkörpers zur Verfügung gestellt werden können, erschöpfen sich durch die vorgenannten Möglichkeiten nicht.

Die mit der Werkzeugmaschine 1000 in funktioneller Verbindung stehende Werkzeugwechseleinrichtung 1060 ist dazu eingerichtet, bei einem geforderten Werkzeugwechsel seitens der Steuervorrichtung 1100 die in der durch die Werkzeugaufnahme 1041 der Arbeitsspindel 1040 aufgenommene Einheit aus Werkzeughalter 10 (inkl. Schwingungserzeuger/Aktor 20) und Werkzeug 90 aus der Werkzeugaufnahme 1041 heraus zu nehmen (nachdem ein Lösen der Einheit entweder durch manuelle Betätigung oder automatisiert erfolgt) und sie an ein vorhandenes Werkzeug-Magazin 1061 zu übergeben, wobei das Werkzeug-Magazin 1061 wiederum die Einheit aus Werkzeughalter 10 und Werkzeug 90 aufnimmt und sie an entsprechender Stelle verwahrt. Dabei kann ein Informationssignal von dem Werkzeug-Magazin 1061 an die Steuervorrichtung 1100 gesendet werden, die über den Verwahrungsort der gerade eben aufgenommenen Einheit Auskunft gibt, um später diese Einheit aus Werkzeughalter 10 und Werkzeug 90 im Werkzeug-Magazin 1061 wiederzufinden.

Nach dem vorgenannten Schritt stellt das Werkzeug-Magazin 1061 eine andere Einheit, bestehend aus einem anderen Werkzeughalter 10 (inkl. einem anderen Schwingungserzeuger/Aktor 20) und einem anderen Werkzeug 90, bereit (abhängig von dem jeweiligen Steuersignal der Steuervorrichtung 1100), die von der Werkzeugwechseleinrichtung 1060 aufgenommen und der Werkzeugaufnahme 1041 der Arbeitsspindel 1040 zugeführt wird. Nach dem Arretieren der anderen Einheit in der Werkzeugaufnahme 1041 (dies kann entsprechend wieder manuell oder automatisiert erfolgen), fährt die Werkzeugwechseleinrichtung 1060 in eine Ruheposition zurück und gibt den Bearbeitungsraum der Werkzeugmaschine 1000 für das weitere Bearbeiten des Werkstücks WS wieder frei.

Ferner ist die mit der Werkzeugmaschine 1000 in funktioneller Verbindung stehende Werkstückwechseleinrichtung 1070 dazu eingerichtet, bei einem geforderten Werkstückwechsel seitens der Steuervorrichtung 1100 das in der Werkstückspanneinrichtung 1053 aufgenommene Werkstück WS aus der Werkstückspanneinrichtung 1053 heraus zu nehmen (nachdem ein Lösen des Werkstücks WS entweder durch manuelle Betätigung oder automatisiert erfolgt) und es an ein vorhandenes Werkstück-Magazin 1071 zu übergeben, wobei das Werkstück-Magazin 1071 wiederum das Werkstück aufnimmt und es an entsprechender Stelle verwahrt. Dabei kann ein Informationssignal von dem Werkstück-Magazin 1071 an die Steuervorrichtung 1100 gesendet werden, die über den Verwahrungsort des gerade eben aufgenommenen Werkstücks WS Auskunft gibt, um später dieses Werkstück WS im Werkstück-Magazin 1071 wiederzufinden.

Zudem kann nach dem vorgenannten Schritt das Werkstück-Magazin 1071 ein anderes, noch unbearbeitetes oder nur teilweise bearbeitetes Werkstück WS (bzw. Rohteil / Rohling) bereitstellen (abhängig von dem jeweiligen Steuersignal der Steuervorrichtung 1100), das von der Werkstückwechseleinrichtung 1070 aufgenommen und der Werkstückspanneinrichtung 1053 zugeführt wird. Nach dem Arretieren des anderen Werkstücks WS in der Werkstückspanneinrichtung 1053 (dies kann entsprechend wieder manuell oder automatisiert erfolgen), fährt die Werkstückwechseleinrichtung 1070 in eine Ruheposition zurück und gibt den Bearbeitungsraum der Werkzeugmaschine 1000 für das (erneute) Bearbeiten des anderen Werkstücks WS wieder frei.

Vorstehend wurden Beispiele bzw. Ausführungsbeispiele der vorliegenden Erfindung sowie deren Vorteile detailliert unter Bezugnahme auf die beigefügten Figuren beschrieben.

Es sei erneut hervorgehoben, dass die vorliegende Erfindung jedoch in keiner Weise auf die vorstehend beschriebenen Ausführungsbeispiele und deren Ausführungsmerkmale begrenzt bzw. eingeschränkt ist, sondern weiterhin Modifikationen der Ausführungsbeispiele umfasst, insbesondere diejenigen, die durch Modifikationen der Merkmale der beschriebenen Beispiele bzw. durch Kombination einzelner oder mehrerer der Merkmale der beschriebenen Beispiele im Rahmen des Schutzumfanges der unabhängigen Ansprüche umfasst sind.

## Patentansprüche

1. Verfahren zum Bearbeiten eines Werkstücks aus Hartmetall für die Herstellung eines Werkzeuggrundkörpers an einer numerisch gesteuerten Werkzeugmaschine mit werkzeugtragender Arbeitsspindel, umfassend:
- Aufnehmen eines ein Werkzeug haltenden Werkzeughalters an einer Werkzeugaufnahme der Arbeitsspindel der Werkzeugmaschine, wobei der Werkzeughalter einen Schwingungserzeuger zum Erzeugen einer Schwingung des Werkzeugs umfasst, und
- Bearbeiten des an der Werkzeugmaschine eingespannten Werkstücks aus Hartmetall mit dem an dem Werkzeughalter gehaltenen, schwingenden Werkzeug zum Herausarbeiten von einer oder mehreren Aussparungen an dem Werkstück zur Herstellung des Werkzeuggrundkörpers.

2. Verfahren nach Anspruch 1, **dadurch gekennzeichnet, dass**
das Werkzeug ein Schleifwerkzeug ist, insbesondere eine Schleifscheibe und/oder ein Schleifstift.

3. Verfahren nach Anspruch 1 oder 2, **dadurch gekennzeichnet, dass**
der Schwingungserzeuger Schwingungen des Werkzeugs in einer Richtung axial zu der Spindelachsrichtung der Arbeitsspindel, in einer Richtung radial zu der Spindelachsrichtung der Arbeitsspindel und/oder in Umfangsrichtung um die Spindelachse der Arbeitsspindel erzeugt, wobei
die durch den Schwingungserzeuger erzeugten Schwingungen des Werkzeugs im Ultraschallbereich liegen, insbesondere bei Frequenzen größer 10 kHz.

4. Verfahren nach einem der vorstehenden Ansprüche, **dadurch gekennzeichnet, dass**
ein Arbeitssignal für das Erzeugen der Schwingung des Werkzeugs kontaktlos an den Schwingungserzeuger übertragen wird.

5. Verfahren nach einem der vorstehenden Ansprüche, **dadurch gekennzeichnet, dass**
das Herausarbeiten von einer oder mehreren Aussparungen an dem Werkstück umfasst:
- Herausarbeiten von einer oder mehreren Spannuten des herzustellenden Werkzeuggrundkörpers,
- Herausarbeiten von einem oder mehreren Plattensitzen des herzustellenden Werkzeuggrundkörpers, - Herausarbeiten von einem oder mehreren Kühlkanälen des herzustellenden Werkzeuggrundkörpers,
- Herausarbeiten von einer oder mehreren Fasen des herzustellenden Werkzeuggrundkörpers,
- Herausarbeiten von einem oder mehreren Freiwinkeln des herzustellenden Werkzeuggrundkörpers, und/oder
- Herausarbeiten von einem oder mehreren Schneidkanten des herzustellenden Werkzeuggrundkörpers.

6. Verfahren nach Anspruch 5, **dadurch gekennzeichnet, dass**
das Herausarbeiten von einer oder mehreren Spannuten des herzustellenden Werkzeuggrundkörpers, das Herausarbeiten von einem oder mehreren Plattensitzen des herzustellenden Werkzeuggrundkörpers, das Herausarbeiten von einem oder mehreren Kühlkanälen des herzustellenden Werkzeuggrundkörpers, das Herausarbeiten von einer oder mehreren Fasen des herzustellenden Werkzeuggrundkörpers, das Herausarbeiten von einem oder mehreren Freiwinkeln des herzustellenden Werkzeuggrundkörpers, und/oder das Herausarbeiten von einer oder mehreren Schneidkanten des herzustellenden Werkzeuggrundkörpers in einer Aufspannung des Werkstücks an der Werkzeugmaschine erfolgt und jeweils mittels unterschiedlicher Werkzeuge, insbesondere Schleifwerkzeuge, ausgeführt wird.

7. Verfahren nach Anspruch 6, **gekennzeichnet durch**
- Auswechseln des Werkzeughalters gegen einen zweiten, ein anderes Werkzeug haltenden Werkzeughalter, wobei der zweite Werkzeughalter einen zweiten Schwingungserzeuger zum Erzeugen einer Schwingung des anderen Werkzeugs umfasst, wobei das Auswechseln des Werkzeug haltenden Werkzeughalters an der Werkzeugaufnahme der Arbeitsspindel der Werkzeugmaschine durch eine dafür eingerichtete Werkzeugwechseleinrichtung durchgeführt wird, und
- Bearbeiten des an der Werkzeugmaschine eingespannten Werkstücks aus Hartmetall mit dem an dem zweiten Werkzeughalter gehaltenen, schwingenden anderen Werkzeug zum Herausarbeiten von einer oder mehreren weiteren Aussparungen an dem Werkstück zur Herstellung des Werkzeuggrundkörpers.

8. Verfahren nach Anspruch 7, **dadurch gekennzeichnet, dass**
mit dem anderen Werkzeug eine oder mehrere Spannuten herausgearbeitet werden, insbesondere nachdem mit dem zuvor eingewechselten Werkzeug ein oder mehrere Plattensitze, ein oder mehrere Kühlkanäle, eine oder mehrere Fasen, ein oder mehrere Freiwinkel und/oder eine oder mehrere Schneidkanten herausgearbeitet wurden,
mit dem anderen Werkzeug ein oder mehrere Plattensitze herausgearbeitet werden, insbesondere nachdem mit dem zuvor eingewechselten Werkzeug ein oder mehrere Kühlkanäle, eine oder mehrere Spannuten, eine oder mehrere Fasen, ein oder mehrere Freiwinkel und/oder eine oder mehrere Schneidkanten herausgearbeitet wurden,
mit dem anderen Werkzeug ein oder mehrere Kühlkanäle herausgearbeitet werden, insbesondere nachdem mit dem zuvor eingewechselten Werkzeug eine oder mehrere Spannuten, ein oder mehrere Plattensitze, eine oder mehrere Fasen, ein oder mehrere Freiwinkel und/oder eine oder mehrere Schneidkanten herausgearbeitet wurden,
mit dem anderen Werkzeug eine oder mehrere Fasen herausgearbeitet werden, insbesondere nachdem mit dem zuvor eingewechselten Werkzeug ein oder mehrere Plattensitze, ein oder mehrere Kühlkanäle, eine oder mehrere Spannuten, ein oder mehrere Freiwinkel und/oder eine oder mehrere Schneidkanten herausgearbeitet wurden,
mit dem anderen Werkzeug ein oder mehrere Freiwinkel herausgearbeitet werden, insbesondere nachdem mit dem zuvor eingewechselten Werkzeug ein oder mehrere Kühlkanäle, eine oder mehrere Spannuten, eine oder mehrere Fasen, ein oder mehrere Plattensitze und/oder eine oder mehrere Schneidkanten herausgearbeitet wurden, oder
mit dem anderen Werkzeug eine oder mehrere Schneidkanten herausgearbeitet werden, insbesondere nachdem mit dem zuvor eingewechselten Werkzeug eine oder mehrere Spannuten, ein oder mehrere Plattensitze, eine oder mehrere Fasen, ein oder mehrere Freiwinkel und/oder ein oder mehrere Kühlkanäle herausgearbeitet wurden.

9. Steuervorrichtung einer numerisch gesteuerten Werkzeugmaschine mit werkzeugtragender Arbeitsspindel und einem Werkzeug haltenden Werkzeughalter, der an einer Werkzeugaufnahme der Arbeitsspindel aufnehmbar ist, **dadurch gekennzeichnet, dass** die Steuervorrichtung dazu eingerichtet ist, an der Werkzeugmaschine ein Verfahren gemäß einem der Ansprüche 1 bis 8 zu steuern.

10. Steuervorrichtung nach Anspruch 9, **gekennzeichnet durch**
ein Bedienpult, das dazu eingerichtet ist, dem herzustellenden Werkzeuggrundkörper zugeordnete Daten als Datensatz über das Bedienpult manuell einzugeben, und
die manuelle Eingabe eine menügeführte, manuelle Eingabe der dem herzustellenden Werkzeuggrundkörper zugeordneten Daten als Datensatz umfasst.

11. Steuervorrichtung nach Anspruch 9, **gekennzeichnet durch**
eine Schnittstelle, die dazu eingerichtet ist, einen dem Werkzeuggrundkörper zugeordneten Datensatz zu empfangen.

12. Steuervorrichtung nach Anspruch 10 oder 11, **dadurch gekennzeichnet, dass**
der Datensatz Parameter betreffend eine Geometrie des herzustellenden Werkzeuggrundkörpers und optional zulässige Toleranzbereiche der Geometrie des herzustellenden Werkzeuggrundkörpers umfasst.

13. Steuervorrichtung nach einem der Ansprüche 10 bis 12, **dadurch gekennzeichnet, dass**
der Datensatz Modelldaten, die ein dreidimensionales Geometriemodell des herzustellenden Werkzeuggrundkörpers angeben, und Materialdaten, die Materialeigenschaften des herzustellenden Werkzeuggrundkörpers angeben, umfasst.

14. Steuervorrichtung nach einem der Ansprüche 9 bis 13, **dadurch gekennzeichnet, dass**
die Steuervorrichtung dazu eingerichtet ist, den dem Werkzeuggrundkörper zugeordneten Datensatz durch Empfang oder manuelle Eingabe zu erhalten und das Verfahren gemäß einem der Ansprüche 1 bis 8 auf Grundlage des empfangenen Datensatzes oder des manuell über das Bedienpult eingegebenen Datensatzes halbautomatisch oder vollautomatisch an der Werkzeugmaschine zu steuern.

15. Computerprogrammprodukt mit einem auf einem computerlesbaren Datenspeichermedium gespeicherten Computerprogramm, das ausführbar ist an einer numerischen Steuervorrichtung einer numerisch gesteuerten Werkzeugmaschine mit werkzeugtragender Arbeitsspindel und einem Werkzeug haltenden Werkzeughalter, der an einer Werkzeugaufnahme der Arbeitsspindel aufnehmbar ist, oder in einem mit der Steuervorrichtung der numerisch gesteuerten Werkzeugmaschine verbundenen Computer, und das dazu eingerichtet ist, an der Werkzeugmaschine ein Verfahren gemäß einem der Ansprüche 1 bis 8 zu steuern.
